(19) Europäisches Patentamt
European Patent Office
Office européen des brevets

(11) **EP 2 120 356 A1**

(12) **DEMANDE DE BREVET EUROPEEN**

(43) Date de publication:
**18.11.2009 Bulletin 2009/47**

(51) Int Cl.:
***H04B 1/707*** (2006.01)     ***H04L 25/03*** (2006.01)

(21) Numéro de dépôt: **09157391.5**

(22) Date de dépôt: **06.04.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.04.2008 FR 0802248**

(71) Demandeur: **Thales**
**92200 Neuilly-sur-Seine (FR)**

(72) Inventeurs:
• **Polaert, Jean**
**78540, VERNOUILLET (FR)**

• **Kozlovsky, Nicolas**
**78000, VERSAILLES (FR)**
• **Julie, Jean-Jacques**
**94270, LE KREMLIN BICETRE (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(54) **Procédé de traitement d'un premier et d'un deuxième signal superposés au sein d'un signal composite incident, et dispositif correspondant.**

(57) L'invention vise un procédé de traitement d'un premier et d'un deuxième signal numérique binaire à partir d'un signal composite incident comprenant les premier et deuxième signaux numériques superposés en temps et en fréquence. Le procédé comprend une démodulation des premier et deuxième signaux superposés, comportant pour chaque bit du signal composite incident :
- une construction (3) de quatre signaux composites intermédiaires, chacun correspondant à une combinaison possible des bits du premier et du deuxième signal selon leur valeur de bit,
- quatre soustractions (4), respectivement chacun des quatre signaux composites intermédiaires du signal composite incident,
- une estimation (5) du maximum de vraisemblance de chaque résultat des soustractions, et
-une délivrance (6) des bits du premier et du deuxième signal dont les valeurs correspondent à celles de la combinaison ayant le maximum de vraisemblance le plus élevé.

FIG. 2

**EP 2 120 356 A1**

## Description

L'invention appartient au domaine des télécommunications numériques, et concerne notamment le traitement de deux signaux superposés contenus dans un même signal dit signal composite. Ce signal composite peut par exemple correspondre à la superposition de deux signaux de communication numérique distincts, émis par des émetteurs tels que des balises terrestres ou maritimes. Ces derniers sont reçus par un récepteur par exemple incorporé au sein d'un satellite, via un même canal de réception.

Dans ce cas de figure, et en particulier lors de l'utilisation de balises de type ARGOS standard à bas débit (référencées « ARGOS STD BD »), les signaux appartiennent au même domaine temporel et fréquentiel, et ont des niveaux d'amplitude voisins.

Ces balises ARGOS STD BD sont très répandues et émettent cycliquement des messages (signaux numériques), de manière indépendante les unes par rapport aux autres. Les messages émis par les différentes balises sont reçus aléatoirement par un satellite, avec une probabilité non nulle de superposition des messages dans les domaines temporels et fréquentiels.

Les signaux numériques émis par les balises ARGOS STD BD sont de type NRZ (« Non Return to Zero » en langue anglaise), encodés à l'aide du code Manchester, particulièrement bien adapté à ce type de signaux numériques. Ces signaux numériques ne possèdent pas de code correcteur d'erreur, et ne sont pas orthogonaux entre eux. Il est donc particulièrement difficile de discriminer les signaux entre eux grâce à leur provenance à l'entrée du satellite, notamment lorsque leur niveau d'amplitude sont très proches (rapport d'amplitude inférieur à 4dB). Par ailleurs, les horloges au niveau bit des balises ne sont pas synchrones.

Une solution connue propose que chaque satellite mémorise un gabarit donné de façon à analyser la présence des signaux numériques superposés, reçus des balises. Cette analyse porte sur des écarts de niveaux et de fréquences entre les signaux numériques superposés, à l'aide des différents paramètres du gabarit. Toutefois, si les signaux numériques sont considérés comme gênés à l'issue de cette analyse, ils sont rejetés et leur traitement n'est pas réalisé. Le rejet des signaux gênés entraîne une perte de l'information ou à tout le moins un retard dans l'élaboration de celle-ci.

La superposition temps/fréquences des signaux numériques reçus par le satellite a pour conséquence une réduction significative de la probabilité de détection (analyse par le gabarit puis traitement), typiquement de l'ordre de 20%.

L'invention a notamment pour but d'apporter une solution à ces problèmes, en particulier lorsque deux messages superposés sont reçus par le récepteur. En effet, pour des balises de type ARGOS STD BD, 75% des cas de figure concerne la superposition de deux messages uniquement.

A cet effet, selon un premier aspect, il est proposé un procédé de traitement d'un premier et deuxième signal numérique binaire à partir d'un signal composite incident comprenant les premier et deuxième signaux numériques superposés en temps et en fréquence.

Selon une caractéristique générale de ce premier aspect, il comprend une démodulation des premier et deuxième signaux superposés, comportant pour chaque bit du signal composite incident :

- une construction de quatre signaux composites intermédiaires, chacun correspondant à une combinaison possible des bits du premier et du deuxième signal selon leur valeur de bit,
- quatre soustractions, respectivement chacun des quatre signaux composites intermédiaires du signal composite incident,
- une estimation du maximum de vraisemblance de chaque résultat des soustractions, et
- une délivrance des bits du premier et du deuxième signal dont les valeurs correspondent à celles de la combinaison ayant le maximum de vraisemblance le plus élevé.

En d'autres termes, on construit les quatre types de signaux composites intermédiaires, le signal composite incident correspondant à l'un de ces signaux composites intermédiaires. Pour identifier le signal composite intermédiaire auquel le signal composite incident correspond, on étudie le résultat de la soustraction de chaque signal composite intermédiaire avec le signal composite indicent.

Ce dernier correspond au signal composite intermédiaire associé au résultat ayant la plus faible énergie.

Selon un mode de mise en oeuvre, il peut comprendre en outre une étape de détermination de descripteurs du premier et du deuxième signal et des signaux de synchronisation au niveau bit du premier et du deuxième signal, ladite construction des quatre signaux composites intermédiaires étant faite à l'aide des descripteurs et desdits signaux de synchronisation au niveau bit .

Par exemple, lesdits descripteurs peuvent correspondre à la porteuse du signal et/ou à l'horloge au niveau du bit et/ou à la période d'un bit et/ou l'amplitude du signal et/ou à l'instant de début et de fin du signal.

Selon un mode de mise en oeuvre, ladite étape de détermination des descripteurs peut comprendre un traitement desdits premier et deuxième signaux superposés, le premier signal ayant une amplitude supérieure au deuxième signal, comportant :

- une démodulation grossière puis une reconstruction des données binaires du premier signal à partir du signal composite incident,
- un filtrage de type adaptatif du premier signal reconstruit de façon à le conformer au premier signal compris au sein du signal composite incident,
- une soustraction du premier signal filtré au signal composite incident de façon à obtenir un signal représentatif du deuxième signal, et
- une démodulation grossière du deuxième signal à l'aide dudit signal représentatif du deuxième signal.

De préférence, il peut comprendre en outre un échantillonnage du signal composite incident, ladite démodulation des premier et deuxième signaux superposés étant appliquée à chaque échantillon du signal composite incident.

De préférence, le premier et le deuxième signal sont sans code d'erreur et non orthogonaux entre eux.

Selon un mode de mise en oeuvre, le procédé peu comprendre en outre une étape de traitement du signal représentatif du deuxième signal aux endroits correspondant aux transitions du premier signal.

Par exemple, pour chaque échantillon, k coefficients mis en oeuvre pour le filtrage de type auto adaptatif du premier signal reconstruit, k étant un entier, peuvent être mis à jour, à l'aide d'un signal de consigne fonction du n-1-k$^{ième}$ échantillon du premier signal reconstruit, n étant un entier représentatif de l'instant d'échantillonnage de l'échantillon considérée, du n-1ième échantillon du signal représentatif du deuxième signal, et du coefficient de même rang pour l'échantillon précédent.

Lesdits premier et deuxième signaux appartiennent de préférence au même domaine temporel et fréquentiel.

En variante, ledit traitement des premier et deuxième signaux superposés est réitérée au moins deux fois.

De préférence, l'étape d'estimation peut comprendre une détection d'une durée au cours de laquelle les résultats des soustractions sont stables, et une délivrance d'un indicateur signalant si cette durée est supérieure ou non à un seuil donné, et dans lequel :

- si la valeur de ladite durée est supérieure à un seuil donné, l'estimation du maximum de vraisemblance de chaque résultat des soustractions est effectuée en fonction d'un signal d'horloge associé au signal devançant l'autre signal parmi le premier et le deuxième signal, ou
- si la valeur de ladite durée est inférieure au seuil donné, l'estimation du maximum de vraisemblance de chaque résultat des soustractions est effectuée en fonction des signaux d'horloge associés au premier et au deuxième signal.

Selon un mode de mise en oeuvre, lorsque ladite durée est inférieure au seuil donné, on détecte en outre les doubles erreurs survenant sur les bits du premier et du deuxième signal à délivrer.

Selon un autre aspect, il est proposé un système de traitement d'un premier et d'un deuxième signal numérique binaire apte à recevoir un signal composite incident comprenant les premier et deuxième signaux numériques superposés en temps et en fréquence.

Selon une caractéristique générale de cet autre aspect, le système comprend un dispositif de démodulation des premier et deuxième signaux numériques superposés, comportant :

- un moyen de construction apte à construire quatre signaux composites intermédiaires, chacun correspondant à une combinaison possible du premier et du deuxième signal selon leur valeur de bit,
- quatre moyens de soustraction, chacun étant apte à soustraire l'un des quatre signaux composites intermédiaires du signal composite incident,
- un moyen d'estimation apte à estimer le maximum de vraisemblance de chaque résultat des soustractions, et apte à délivrer en sortie les bits du premier et du deuxième signal dont les valeurs correspondent à celles de la combinaison ayant le maximum de vraisemblance le plus élevé.

Selon un mode de réalisation le système peut comprendre un moyen de détermination apte à déterminer des descripteurs du premier et du deuxième signal et des signaux de synchronisation au niveau bit du premier et du deuxième signal, lesdits descripteurs étant délivrés au moyen de construction de façon qu'il soit apte à construire lesdits signaux intermédiaire à l'aide des descripteurs et desdits signaux de synchronisation au niveau bit.

Par exemple, lesdits descripteurs peuvent correspondre à la porteuse du signal et/ou à l'horloge au niveau du bit et/ou à la période d'un bit et/ou l'amplitude du signal et/ou à l'instant de début et de fin du signal.

Selon un mode de réalisation, ledit moyen de détermination peut comprend une entrée apte à recevoir le signal composite et incorpore des moyens de traitement du premier et du deuxième signal à partir dudit signal composite incident, le premier signal ayant une amplitude supérieure à celle du deuxième signal, le moyen de détermination comprenant :

- un premier moyen de démodulation apte à démoduler grossièrement le premier signal à partir du signal composite,

- un moyen de reconstruction couplé en sortie du moyen de démodulation, apte à reconstruire les données binaires du premier signal à partir du premier signal démodulé,
- un moyen de filtrage de type adaptatif apte à recevoir et à filtrer le premier signal reconstruit de façon à le conformer au premier signal compris au sein du signal composite incident,
- un moyen de soustraction apte à recevoir d'une part le signal composite incident, et d'autre part le premier signal filtré, de façon à soustraire le premier signal filtré au signal composite incident, et à délivrer un signal représentatif du deuxième signal,
- un deuxième moyen de démodulation apte à démoduler grossièrement le deuxième signal à partir du signal représentatif du deuxième signal.

Selon un mode de réalisation, le moyen de détermination peut comprendre en outre un moyen d'échantillonnage couplé en amont du moyen de démodulation, apte à recevoir le signal composite en entrée, et à délivrer en sortie des échantillons du signal composite au moyen de démodulation .

De préférence, le moyen de détermination peut comprendre en outre un moyen de traitement des transitions, apte à traiter ledit signal représentatif du deuxième signal aux endroits correspondant aux transitions du premier signal, le moyen de traitement des transitions étant couplé en sortie du moyen de démodulation.

De préférence, ledit moyen de filtrage est un filtre à réponse finie comprenant :

- une première entrée apte à recevoir le premier signal reconstruit,
- une deuxième entrée dite de commande apte à recevoir un signal de consigne fonction du premier signal reconstruit, du signal représentatif du deuxième signal et d'un coefficient de convergence, et
- une sortie apte à délivrer le premier signal filtré.

Par exemple, le moyen de soustraction et le moyen de filtrage peuvent être couplés de façon à former un filtre auto adaptatif.

En variante, le système peut comprendre au moins deux moyens de détermination, montés en cascade.

Par exemple, le moyen d'estimation peut comprendre un moyen de détection apte à détecter une durée au cours de laquelle les résultats des soustractions sont stables, et apte à délivrer un indicateur signalant si cette durée est supérieure ou non à un seuil donné, et dans lequel :

- si la valeur de ladite durée est supérieure à un seuil donné, le moyen d'estimation est apte à estimer le maximum de vraisemblance de chaque résultat des soustractions en fonction d'un signal d'horloge associé au signal devançant l'autre signal parmi le premier et le deuxième signal, ou
- si la valeur de ladite durée est inférieure au seuil donné, le moyen d'estimation est apte à estimer le maximum de vraisemblance de chaque résultat des soustractions en fonction des signaux d'horloge associés au premier et au deuxième signal.

Selon un mode de réalisation, le moyen d'estimation peut être apte en outre, à détecter les doubles erreurs survenant sur les bits du premier et du deuxième signal à délivrer, lorsque ladite durée est inférieure au seuil donné.

Selon un autre aspect, il est proposé une utilisation du tel que décrit ci-dessus, au sein d'un satellite apte à recevoir des signaux émis par des balises de type ARGOS.

D'autres avantages et caractéristiques de l'invention apparaîtront à l'examen de la description détaillée d'un mode de mise en oeuvre d'un procédé selon l'invention, et de modes de réalisation nullement limitatifs, et des dessins annexés sur lesquels :

- la figure 1 illustre un exemple d'utilisation de l'invention,
- la figure 2 illustre un mode de mise en oeuvre d'un procédé selon l'invention,
- la figure 3 illustre un mode de mise en oeuvre d'un système selon l'invention,
- les figures 4 et 5 illustre la variation des signaux mis en oeuvre au sein de l'invention pour deux cas différents,
- la figure 6 illustre un exemple du cas représenté sur la figure 5,

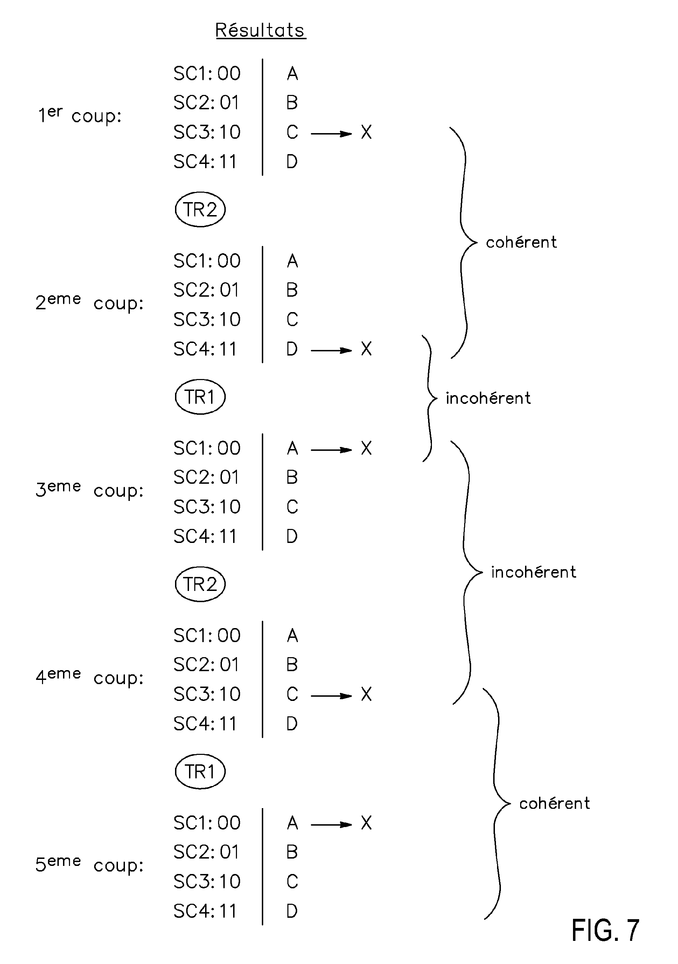

- la figure 7 illustre la variation des signaux mis en oeuvre pour le cas illustré sur la figure 5, en présence de deux erreurs successives dans l'un des signaux démodulés,
- la figure 8 illustre un exemple de différentes étapes mises en oeuvre pour le traitement des signaux superposés,
- les figures 9 à 12 représentent un mode de réalisation d'un moyen de détermination des descripteurs, incorporé au sein d'un système selon l'invention.

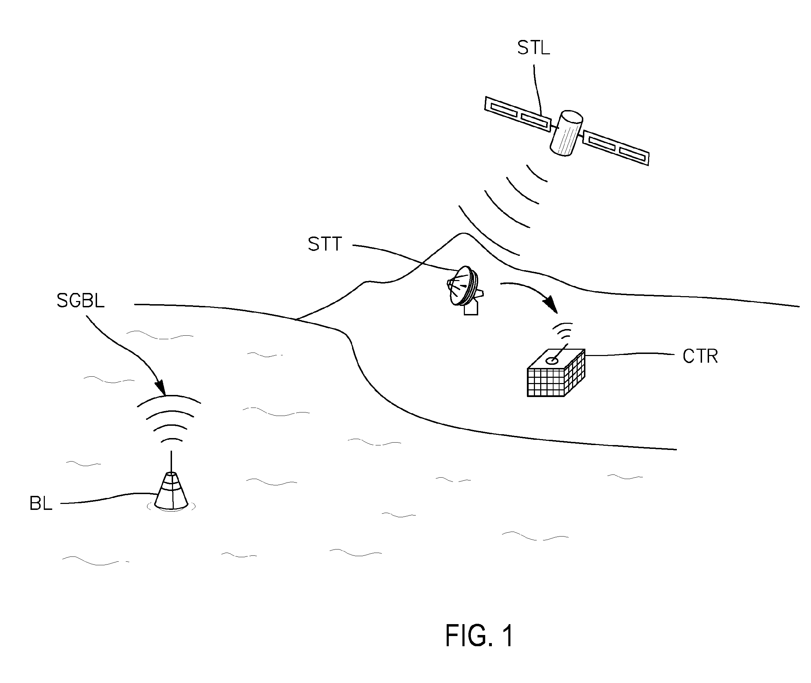

On se réfère à la figure 1 représentant un exemple d'utilisation de l'invention. Cette utilisation concerne le traitement de signaux numériques de balises de type ARGOS STD BD, ici une balise maritime référencé BL. La balise émet des signaux numériques SGBL qui sont reçus par un satellite STL, et plus particulièrement par un récepteur incorporé au sein de ce satellite. Ce dernier traite les messages contenus dans ces signaux numériques puis les transfère vers une station terrestre STT. La station terrestre transmet automatiquement les messages vers un centre de traitement ARGOS, CTR. Celui-ci détermine la position de la balise émettrice puis distribue les résultats aux utilisateurs.

L'invention concerne notamment la réception et le traitement des signaux numériques par le récepteur du satellite.

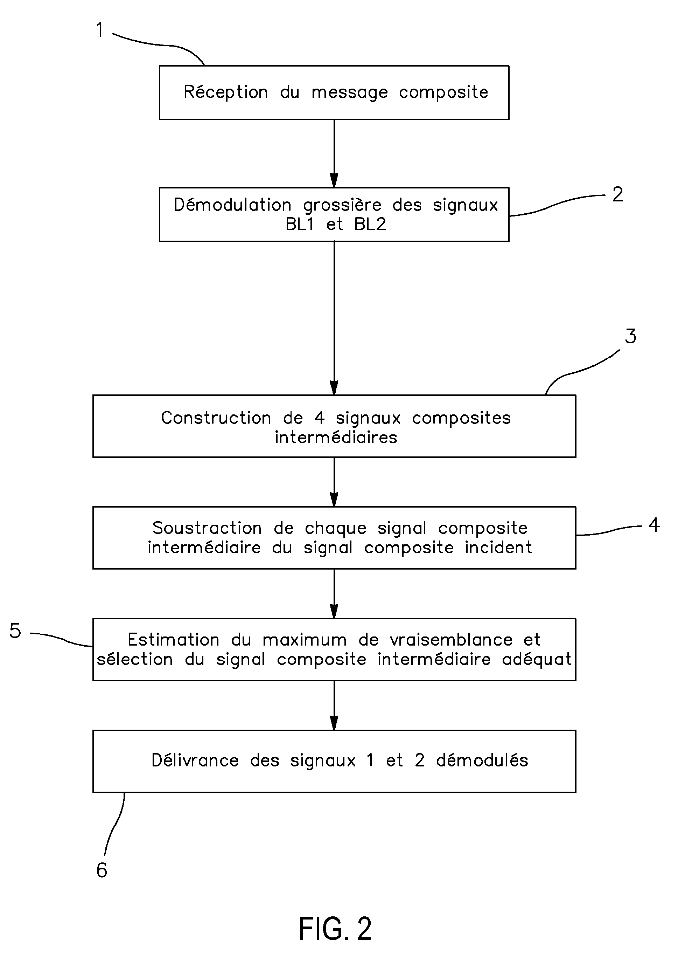

La figure 2 représente un mode de mise en oeuvre d'un procédé selon l'invention.

Au cours d'une première étape 1, on reçoit un signal composite. Celui-ci comprend deux signaux numériques superposés issus dans cet exemple de deux balises de type ARGOS. Ce mode de mise en oeuvre vise à démoduler les deux signaux numériques binaires superposés en temps et en fréquence, respectivement référencé BL1 et BL2, de façon à obtenir les informations binaires qu'ils véhiculent.

On démodule grossièrement les deux signaux superposés BL1 et BL2, 2. Ces démodulations grossières ont notamment pour but d'extraire des descripteurs des deux signaux, BL1 et BL2. Ces descripteurs peuvent être par exemple un signal de synchronisation au niveau bit ou encore la porteuse de chaque signal.

Puis à l'aide des descripteurs extraits, on construit quatre signaux composites intermédiaires, 3. Chaque signal intermédiaire correspond à une combinaison possible des deux signaux superposés selon la valeur prises par leurs bits. Ainsi, l'un des signaux composites intermédiaires correspond à une combinaison du premier signal BL1 prenant la valeur « 1 », et du deuxième signal BL2 prenant la valeur « 0 », un autre correspond à une combinaison du premier signal BL1 prenant la valeur « 1 », et du deuxième signal BL2 prenant la valeur « 1 », un autre correspond à une combinaison du premier signal BL1 prenant la valeur « 0 », et du deuxième signal BL2 prenant la valeur « 0 » et le dernier correspond à une combinaison du premier signal BL1 prenant la valeur « 0 », et du deuxième signal BL2 prenant la valeur « 1 ».

Chaque signal composite intermédiaire est soustrait du signal composite incident, 4. On estime alors le maximum de vraisemblance de chacun des quatre résultats des soustractions, 5. Le résultat de cette estimation correspond à une énergie.

La valeur de l'énergie résultante la plus faible correspond au maximum de vraisemblance de plus élevé. Elle indique que la combinaison valeur des bits des deux signaux superposés composant le signal composite incident est celle des bits des signaux superposés du signal composite intermédiaire correspondant. Ce dernier est sélectionné. On délivre alors les deux signaux superposés qui composent le signal intermédiaire composite sélectionné, 6.

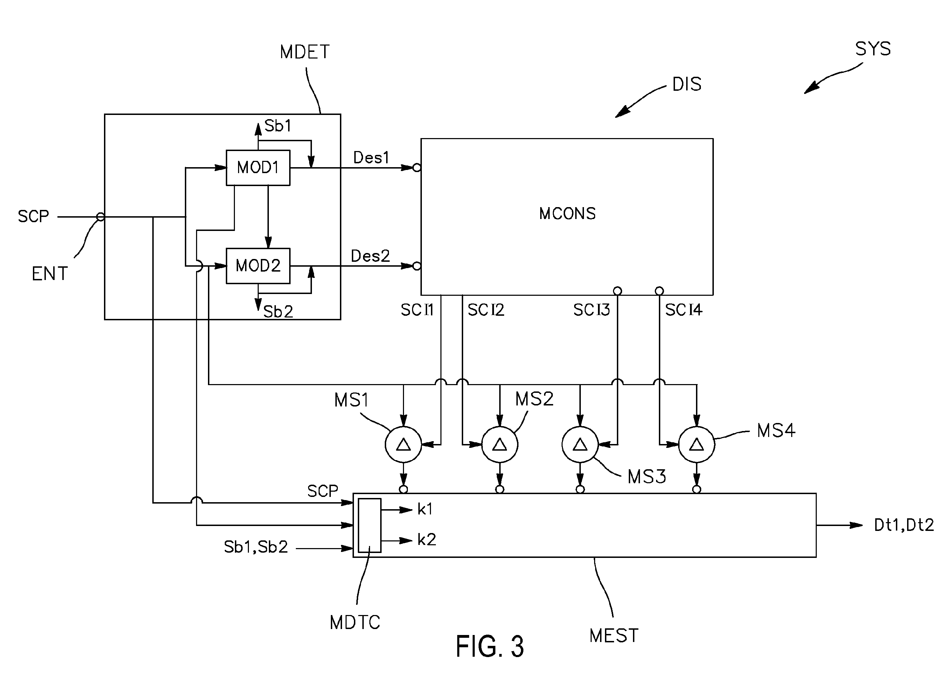

On se réfère à présent à la figure 3 qui illustre un mode de réalisation d'un système selon l'invention. Ce système référencé SYS peut être par exemple un récepteur incorporé au sein d'un satellite.

Le système SYS incorpore un dispositif de démodulation DIS. Celui-ci comprend une entrée ENT apte à recevoir un signal composite SCP. Comme explicité ci-avant, ce signal composite est formé de deux signaux superposés, dont l'amplitude peut être très proche. Par exemple, le rapport d'amplitude entre les deux signaux peut être inférieur à 4 dB.

Ce signal composite incident SCP est délivré à un moyen de détermination MDET apte à traiter le signal composite de façon à extraire un certain nombre de descripteurs des signaux superposés le composant. Selon un mode de réalisation, le moyen de détermination MDET comprend deux modules, respectivement MOD1 et MOD2, aptes à extraire les descripteurs de chacun des signaux superposés BL1 et BL2. Ces descripteurs Des1 et Des2, comprennent par exemple un signal de synchronisation au niveau bit Sb1 et Sb2, l'amplitude de chaque signal et la porteuse de chacun des signaux.

On considère dans cet exemple que chaque signal de synchronisation Sb1, Sb2 correspond à une impulsion générée à l'émission de chaque nouveau bit du signal considéré. Chacun des signaux de synchronisation Sb1, Sb2 est associé à un signal d'horloge, respectivement Hv1 et Hv2, oscillant à la fréquence d'émission des bits.

Un moyen de construction MCONS reçoit les descripteurs extraits Des1, Des2 de façon à élaborer quatre signaux composites intermédiaires tels que définis ci-avant.

Ceux-ci sont respectivement référencés SCI1 pour les valeurs de bits « 00 », SCI2 pour les valeurs « 01 », SCI3 pour les valeurs de bits « 10 » et SCI4 pour les valeurs de bit « 11 ».

Ces signaux sont respectivement délivrés à quatre moyens de soustractions MS1, MS2, MS3 et MS4. Ces derniers reçoivent également en entrée le signal composite incident SCP de façon à soustraire chacun des signaux composites intermédiaires au signal composite incident SCP. Les résultats des soustractions sont délivrés à un moyen d'estimation MEST. Celui-ci reçoit également en entrée le signal composite incident SCP, et les deux signaux de synchronisation au niveau bit Sb1 et Sb2. Ces trois signaux sont transmis à un moyen de détection MDTC apte à élaborer deux variables k1 et k2. Selon les valeurs de ces variables, la durée d'intégration durant laquelle peut opérer le moyen d'estimation MEST est plus ou moins longue. Si k1>>k2 ou k2>>k1, on considère que les deux signaux de synchronisation Sb1 et Sb2 oscillent quasi-simultanément. Si les valeurs des deux variables k1 et k2 sont proches, on considère que les signaux de synchronisation au niveau bit Sb1 et Sb2 sont entrelacés.

Le premier cas implique une durée d'intégration suffisamment longue pour que qu'à chaque coup d'horloge, le moyen d'estimation MEST puisse estimer la valeur du bit des deux signaux superposés du signal composite, à l'instant donné. Le moyen d'estimation MEST est synchronisé sur le signal de synchronisation survenant le premier.

Le deuxième cas implique une durée d'intégration trop courte pour estimer la valeur du bit des deux signaux superposés du signal composite, à l'instant donné. Le moyen d'estimation a alors besoin de deux coups d'horloge pour estimer la valeur du bit des deux signaux superposés du signal composite, à l'instant donné.

Ces deux cas seront explicités plus en détail ci-après.

Une fois les valeurs des bits de chaque signal estimées, ceux-ci Dt1, Dt2 sont délivrés en sortie.

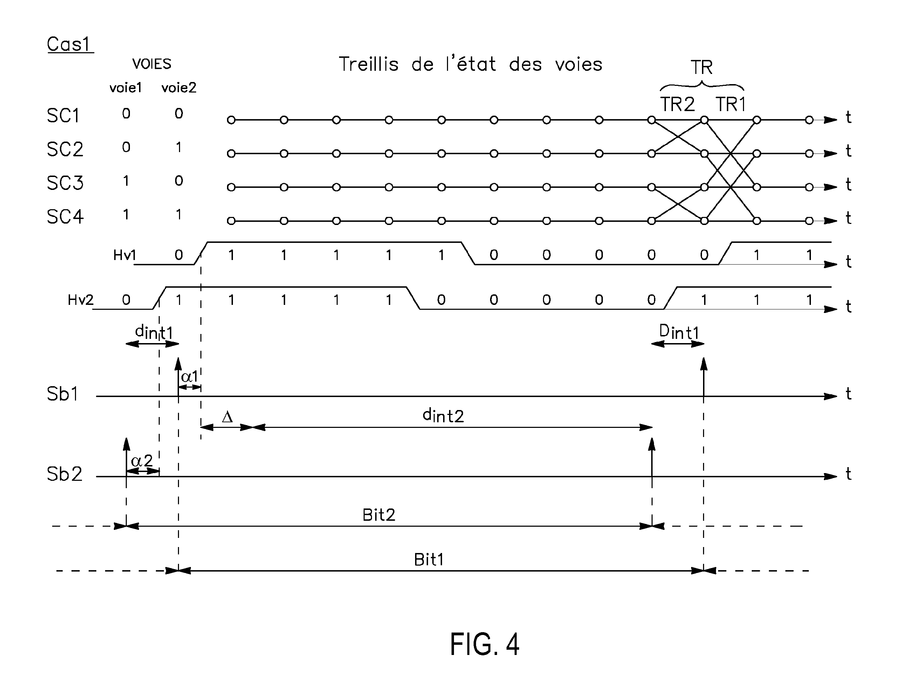

On se réfère à présent à la figure 4. Cette figure illustre le premier cas précité, c'est-à-dire lorsque k1>>k2 ou k2 >> k1. Les variations des signaux de synchronisation Sb1 et Sb2 sont représentées sur les deux axes temporels inférieurs. Juste au dessus, se trouvent les deux horloges Hv1 et Hv2 qui leur sont respectivement associées. Les décalages $\alpha1$ et $\alpha2$ entre l'impulsion du signal de synchronisation et l'horloge qui lui est associé est dû aux caractéristiques techniques du dispositif.

Entre deux impulsions du signal de synchronisation Sb2 est émis un bit Bit2 du deuxième signal. De même, entre deux impulsions du signal de synchronisation Sb1 est émis un bit Bit1, du premier signal.

Les durées $d_{int1}$ et $d_{int2}$ correspondent respectivement aux durées d'intégration du moyen d'estimation, selon que l'on considère le signal de synchronisation au niveau bit Sb1 ou Sb2. La durée d'intégration correspond à la durée pendant laquelle les données émises sur les voies 1 et 2 (respectivement pour les signaux 1 et 2) sont stables.

Dans cet exemple, le signal de synchronisation Sb2 est en avance sur le signal de synchronisation Sb1. La durée $d_{int2}$ est supérieure à la durée $d_{int1}$. Elle débute au moment où survient le front montant de l'horloge associée au signal 1, moyennant un retard $\Delta$ dû à la période d'échantillonnage. Par conséquent, le moyen d'estimation MEST est opérationnel durant la durée $d_{int2}$.

Le treillis de l'état des voies représente les quatre signaux composites intermédiaires. La zone TR représente la transition des deux signaux composant les signaux composites intermédiaires, tout d'abord la transition TR2 du deuxième signal sur la voie 2 (le signal de synchronisation Sb2 est «en avance) puis celle du premier signal sur la voie 1. Les traits transversaux représentent les différentes possibilités de changement de valeurs des bits de chaque signal.

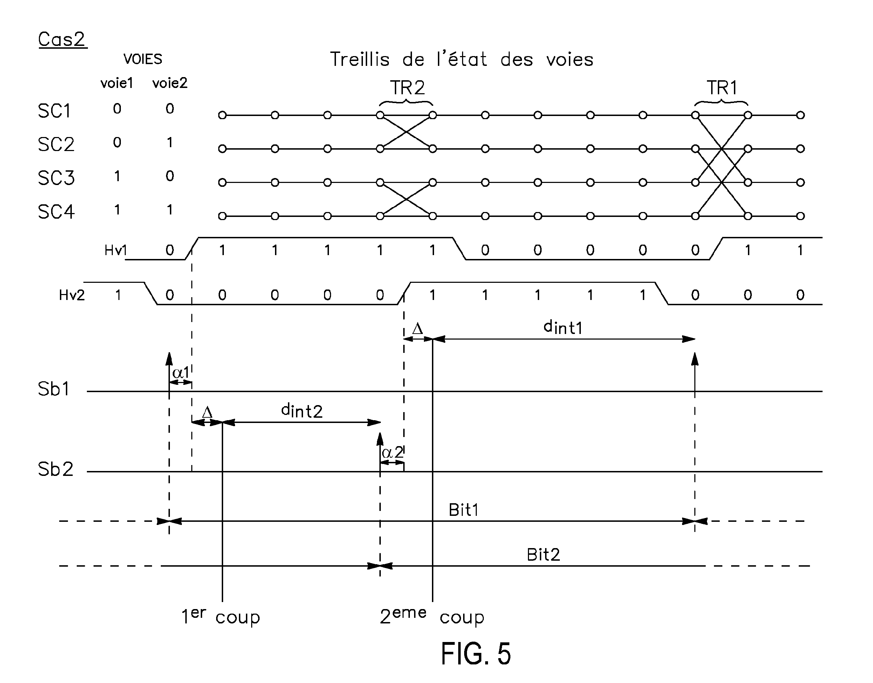

On se réfère à présent à la figure 5 qui représente le deuxième cas cité ci-avant, c'est-à-dire lorsque les valeurs des deux variables k1 et k2 sont proches. Dans ce cas les durées d'intégration $d_{int1}$ et $d_{int2}$ ont des valeurs très proches,

par exemple : $\dfrac{3}{7} \le \dfrac{d_{\mathrm{int}\,i}}{d_{\mathrm{int}\,j}} \le 1$ , étant des entiers de valeur distincte et pouvant prendre les valeurs 1 ou 2.

Comme on peut le voir, les fronts montants des signaux d'horloge Hv1 et Hv2 sont décalés. Les zones de transition TR1 et TR2 sont alors relativement éloignées dans le temps. Le moyen de détermination MDET a donc besoin de deux coups d'horloge pour trouver la valeur de chaque signal formant le signal composite intermédiaire. En effet, chaque résultat des quatre soustractions ne donne qu'une seule valeur de bit.

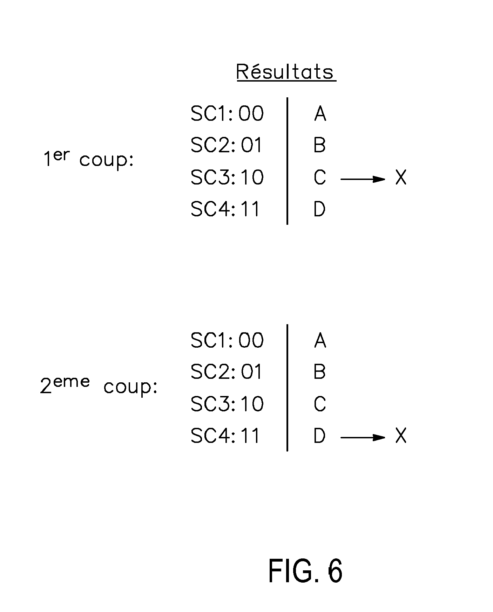

La figure 6 illustre un exemple du deuxième cas. On calcule le maximum de vraisemblance des quatre résultats issus des quatre soustractions de chaque signal composite intermédiaire et du signal composite incident. Ces résultats sont appelés ici A, B, C et D.

Au premier coup, le résultat C (« 10 ») est considéré comme le plus proche du signal composite incident. Ce résultat nous donne la valeur du bit du premier signal formant le signal composite incident.

Au deuxième coup, une transition du deuxième signal a eu lieu. Le résultat D (« 11 ») est considéré comme le plus proche du signal composite incident. Ce résultat nous donne la valeur du bit du deuxième signal formant le signal composite incident.

Comme illustré sur la figure 6, lorsqu'on se retrouve dans le deuxième cas, il est possible de détecter un résultat faux, dans le cas ou deux incohérences surviennent successivement.

En effet, sur l'exemple représenté, entre le 2ème et le 3ème coup, une transition TR1 au niveau du signal BL1 survient. Or la valeur du deuxième bit à changé entre ces deux coups, ce qui est impossible sans transition de type TR2.

Entre le 3ème et le 4ème coup, une transition TR2 au niveau du signal BL2 survient. Or le résultat issu du 4ème coup montre une variation de la valeur du premier bit, ce qui est impossible sans transition de type TR1.

Cette double faute indique que le résultat obtenu au 3ème coup est très probablement faux. Toutefois, il est possible de corriger sa valeur en utilisant le résultat obtenu au 2ème et au 4ème coup, qui eux sont cohérents.

Pour ce faire, le moyen de détermination peut incorporer un module de détection et de correction d'erreur, apte à fonctionner lorsque les valeurs de k1 et k2 sont très proches. A des fins de simplification, ce module n'est pas représenté sur la figure 3.

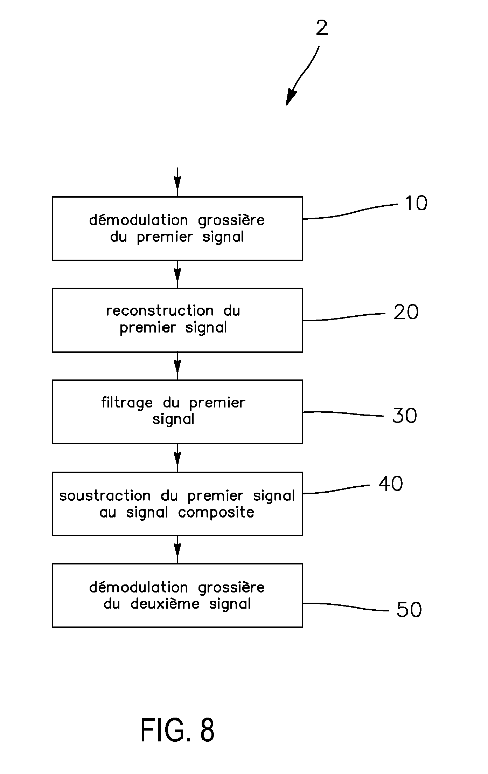

La figure 8 décrit dans les grandes lignes les principales étapes d'un mode de mise en oeuvre d'une démodulation grossière des deux signaux superposés, BL1 et BL2.

Cette étape vise à extraire des descripteurs des deux signaux superposés, BL1 et BL2. Pour cela, on procède tout d'abord à une démodulation grossière du signal numérique ayant la plus forte amplitude, puis à la démodulation grossière de l'autre signal numérique.

Ces signaux numériques sont distincts mais superposés dans des domaines de temps et de fréquences. On considère ici que leurs niveaux d'amplitude sont relativement proches, voire avoir un rapport d'amplitude inférieur à 4dB. On considère ici que le signal issu d'une première balise, appelé premier signal BL1 possède le niveau d'amplitude le plus élevé. L'autre signal numérique, issu d'une deuxième balise est appelé deuxième signal BL2.

On procède à une démodulation 10 du premier signal, celui-ci ayant un niveau d'amplitude plus élevé. La démodulation d'un signal numérique de forte amplitude, couplée à d'autres signaux numériques est connue de l'homme du métier. Le premier signal démodulé est alors reconstruit 20. On obtient ainsi les informations binaires contenues dans le premier signal numérique. Cependant, ces informations binaires ne sont pas directement exploitables pour tous les signaux, en particulier, lorsque les amplitudes des signaux BL1 et BL2 sont très proches.

On filtre alors le premier signal reconstruit de façon à le conformer le plus possible au premier signal contenu dans le signal composite reçu 30. A l'issue de ce filtrage on obtient un premier signal filtré très proche du signal reçu. Ce filtrage sera expliqué plus en détail ci-après.

Le premier signal filtré est soustrait au signal composite reçu, 40. On obtient, à l'issue de cette soustraction, un signal représentatif du deuxième signal. Celui-ci est utilisé de deux façons.

Tout d'abord, il est multiplié à un coefficient de convergence et au premier signal reconstruit, est utilisé en tant que signal de consigne pour ajuster les paramètres de filtrage du premier signal reconstruit.

Enfin, il est utilisé pour la démodulation du deuxième signal, 50.

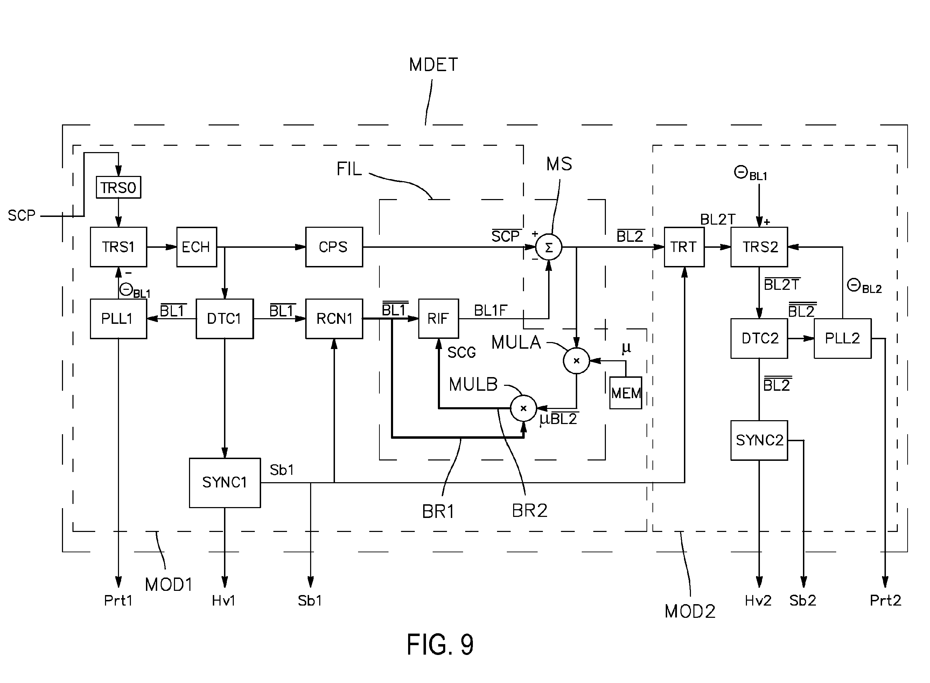

On se réfère à présent à la figure 9 qui décrit à titre d'exemple un mode de réalisation du moyen de détermination MDET, apte à mettre en oeuvre les étapes représentées sur la figure 8.

Pour effectuer la démodulation grossière des deux signaux BL1 et BL2, le moyen de détermination MDET est décomposé en un premier et un deuxième modules MOD1 et MOD2, respectivement dédiés à la démodulation du premier et du deuxième signal.

Le signal composite SCP subit tout d'abord une première transposition en fréquence, opérée par un moyen de transposition TRS0, par exemple un mélangeur, incorporé au sein du premier module MOD1. Cette transposition a pour but de décaler le signal composite dans une bande de fréquence de quelques centaines de kHz. En effet, le signal composite reçu appartient à une bande de fréquence de l'ordre de 400MHz, son traitement impliquerait un dispositif de traitement très complexe.

A l'issue de cette première transposition, on procède à une deuxième transposition en fréquence à l'aide d'un autre moyen de transposition en fréquence TRS1. Ce dernier a pour fonction de centrer le signal sur la phase estimée du signal de la balise 1, $\Theta_{BL1}$ de façon à pouvoir travailler en mode numérique.

Le signal composite échantillonné est alors délivré à un échantillonneur ECH. Puis chaque échantillon du signal composite est envoyé à un moyen de détection et de démodulation du signal issu de la balise 1, DTC1. Dans cet exemple, on considère que le niveau d'amplitude du signal de la balise 1, BL1, est supérieur à celui du signal de la balise 2. Bien entendu le rôle des signaux peut être échangé. Le signal démodulé issu de traitement effectué par le moyen DTC1 est nommé premier signal démodulé et référencé $\overline{BL1}$.

Le premier signal démodulé $\overline{BL1}$ est transmis à une boucle à verrouillage de phase PLL1 de façon à récupérer la phase estimée du signal de la balise 1, $\Theta_{BL1}$. Celle-ci est transmise à l'autre moyen de transposition en fréquence TRS1 pour ajuster la transposition de fréquence du signal composite SCP.

Par ailleurs, la boucle de verrouillage de phase PLL1 est capable d'extraire la porteuse du signal $\overline{BL1}$, celle-ci étant référencée Prt1. Cette porteuse correspond au signal de porteuse du signal BL1 d'entrée.

D'autre part, le premier signal démodulé $\overline{BL1}$ est transmis à un bloc SYNC1 de détection du signal de synchronisation au niveau bit. Ce bloc SYNC1 est apte à déterminer le signal de synchronisation au niveau bit, Sb1 du premier signal BL1, en traitant le premier signal démodulé $\overline{BL1}$. Le signal de synchronisation au niveau bit Sb1 est délivré en sortie du premier module MOD1. Le bloc de synchronisation SYNC1 génère également le signal d'horloge Hv1 associé au signal de synchronisation au niveau bit, Sb1.

Enfin, le premier signal démodulé $\overline{BL1}$ est également transmis à un moyen de reconstruction RCN1 couplé en sortie du moyen de démodulation DTC1. Le moyen de reconstruction RCN1 a pour fonction de reconstruire un signal comportant les informations binaires à partir du premier signal démodulé $\overline{BL1}$ et à l'aide du signal de synchronisation Sb1. Le signal délivré en sortie du moyen de reconstruction RCN1 est nommé premier signal reconstruit et est référencé $\overline{BL1}$. Ce signal $\overline{BL1}$ contient l'ensemble des informations binaires véhiculées par le premier signal BL1. Il est délivré en sortie du dispositif DIS.

Pour améliorer la démodulation grossière du deuxième signal BL2, on filtre le premier signal reconstruit $\overline{BL1}$, de façon à obtenir à l'issue de la soustraction un signal proche du deuxième signal BL2.

Pour ce faire on cherche à lisser le premier signal reconstruit $\overline{BL1}$, pour le conformer le plus possible au signal de la première balise BL1. Le premier signal reconstruit $\overline{BL1}$ est alors transmis à un filtre à réponse impulsionnelle finie RIF dans le but de l'égaliser. Par ailleurs, les paramètres du filtre à réponse impulsionnelle finie RIF sont ajustables en fonction d'un signal de consigne SCG, qui sera décrit plus en détail ci-après. Le premier signal filtré est référencé BL1F.

A la sortie de l'échantillonneur ECH, les échantillons du signal composite sont également transmis à un module de compensation CPS, apte à compenser le retard dû au temps de traitement, sur le signal composite. Le signal composite compensé est référencé $\overline{SCP}$.

Celui-ci est délivré à un moyen de soustraction MS, qui reçoit sur une autre entrée le premier signal filtré BL1F. Le moyen de soustraction MS est alors capable de soustraire le premier signal filtré BL1F au signal composite compensé $\overline{SCP}$, de façon à délivrer un signal représentatif du deuxième signal, référencé $\overline{BL2}$.

Le moyen de soustraction MS et le filtre à réponse impulsionnelle finie RIF forment un filtre auto-adaptatif FIL.

De manière à élaborer le signal de consigne SCG précité, le signal représentatif du deuxième signal $\overline{BL2}$ est délivré à un premier multiplieur MULA qui reçoit également sur une autre entrée, un coefficient de convergence μ, issu d'un moyen de mémorisation MEM.

Le produit μ.$\overline{BL2}$ est délivré à un deuxième multiplieur MULB qui reçoit sur une autre entrée le premier signal reconstruit $\overline{BL1}$, via une branche BR1. Cette branche BR1 sera décrite plus en détail ci-après. Le produit μ$\overline{BL2}$.$\overline{BL1}$ forme le signal de consigne SCG. Celui-ci est délivré au filtre à réponse impulsionnelle finie RIF, via une branche BR2, décrite plus en-détail ci-après.

Le filtre à réponse impulsionnelle finie RIF, comporte notamment un ajustement des paramètres en fonction du signal de consigne SCG. Plus précisément, cet ajustement est opéré de manière itérative pour chaque échantillon des différents signaux mis en jeu. En d'autres termes, pour un échantillon donné, les paramètres de filtrage ont été ajustés en fonction de l'échantillon précédent. Les inventeurs ont remarqué que cette configuration du filtre à réponse impulsionnelle finie RIF, complètement différente d'une configuration classique de ce type de filtre, permet de lisser le signal $\overline{BL1}$ de façon à le conformer au premier signal BL1. Un exemple d'un premier signal filtré est décrit ci-après.

Le signal représentatif du deuxième signal $\overline{BL2}$, issu du moyen de soustraction MS est délivré à un moyen de traitement TRT apte à traiter le signal représentatif du deuxième signal $\overline{BL2}$, aux endroits correspondant aux transitions du premier signal. En effet, à ces endroits apparaissent des pics parasites, perturbant le signal.

Ce traitement est effectué en fonction du signal de synchronisation Sb1 précité. Le moyen de traitement TRT est incorporé au sein du deuxième module MOD2.

Le signal représentatif du deuxième signal traité est référencé BL2T. Il est délivré à un autre moyen de transposition de fréquence TRS2 auquel on délivre également la phase estimée du signal de la balise 1, $\Theta_{BL1}$. Cet autre moyen de transposition TRS2 a pour fonction de compenser la première transposition effectuée par le moyen de transposition en fréquence TRS1.

Le signal représentatif du deuxième signal traité et transposé est référencé $\overline{BL2T}$.

On démodule le deuxième signal à partir du signal représentatif du deuxième signal traité transposé BL2T. Cette démodulation est effectuée par un autre moyen de démodulation DTC2. Il délivre en sortie un signal référencé $\overline{BL2}$. Ce signal comporte les informations binaires véhiculées par le deuxième signal BL2 reçu par le récepteur REC. De même que pour le premier module MOD1, le signal grossièrement démodulé $\overline{BL2}$ est envoyé d'une part à une boucle de verrouillage de phase PLL2 et à un moyen de synchronisation SYNC2.

La boule à verrouillage de phase PLL2 est capable de récupérer la phase estimée du signal de la balise 2, $\Theta_{BL2}$. Celle-ci est transmise à au moyen de transposition en fréquence TRS2 précité pour ajuster la transposition de fréquence du signal BL2T.

Par ailleurs, la boucle de verrouillage de phase PLL2 est capable d'extraire la porteuse du signal $\overline{BL2}$, celle-ci étant référencée Prt2. Cette porteuse correspond au signal de porteuse du signal BL2 d'entrée.

Le bloc SYNC2 est quant à lui apte à déterminer le signal de synchronisation au niveau bit, Sb2 du premier signal BL2, en traitant le deuxième signal grossièrement démodulé $\overline{BL2}$. Le signal de synchronisation au niveau bit Sb2 est délivré en sortie du deuxième module MOD2. Le bloc de synchronisation SYNC2 génère également le signal d'horloge Hv2 associé au signal de synchronisation au niveau bit, Sb2.

Par ailleurs, les modules DTC1 et DCT2 sont respectivement aptes à extraire les amplitudes des signaux BL1 et BL2.

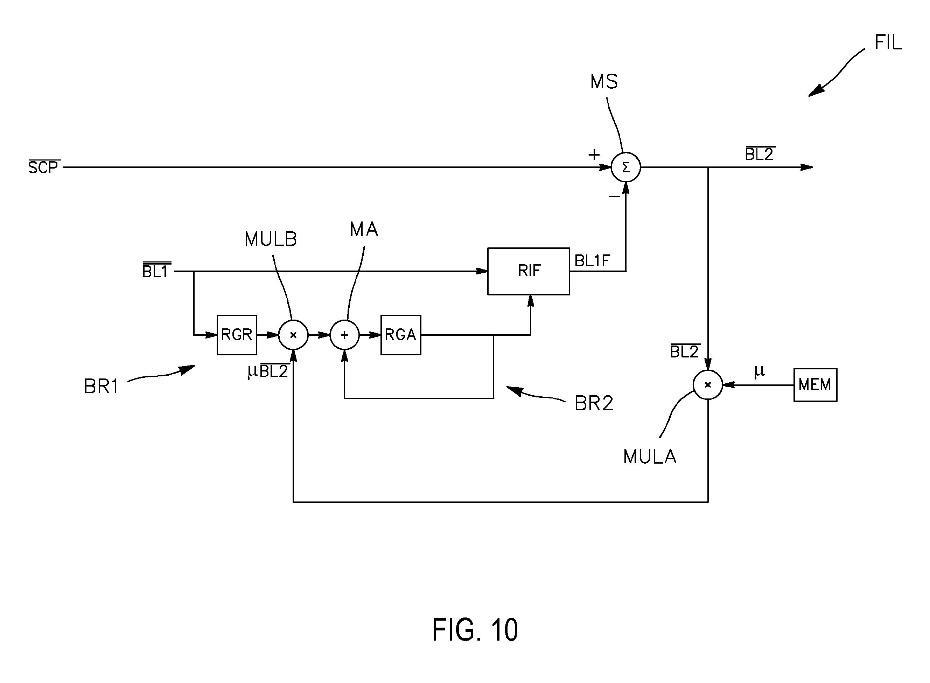

On se réfère à présent à la figure 10 qui illustre plus précisément le filtre auto-adaptatif FIL.

La branche BR1 comprend un registre RGR, qui a pour fonction de stocker les échantillons du signal $\overline{BL1}$ durant le temps de traitement du signal μ.$\overline{BL2}$. Le registre RGR permet de compenser le retard dû au temps de traitement.

La branche BR2 comprend un moyen d'addition MA couplé à un registre accumulateur RGA, classiquement associé à un filtre à réponse finie. Ce registre RGA permet de corriger chaque nouvel échantillon du signal arrivant en entrée du moyen d'addition MA en provenance du multiplieur MULB, avec les valeurs des échantillons précédents. En d'autres termes, il vient :

$$BL2(n-1)T = SCP(n-1)T - BLI1F(n-1)T \text{, et}$$

$$\alpha[k, nT] = \alpha[k, (n-1)T] + \mu . \overline{\overline{BL2}}((n-1)T) . \overline{\overline{BL1}}((n-1-k)T),$$

où :

- T est la période d'échantillonnage,
- nT est l'instant d'échantillonnage, et
- $\alpha[k,nT]$ est le coefficient d'échantillonnage de rang k à l'instant d'échantillonnage nT.

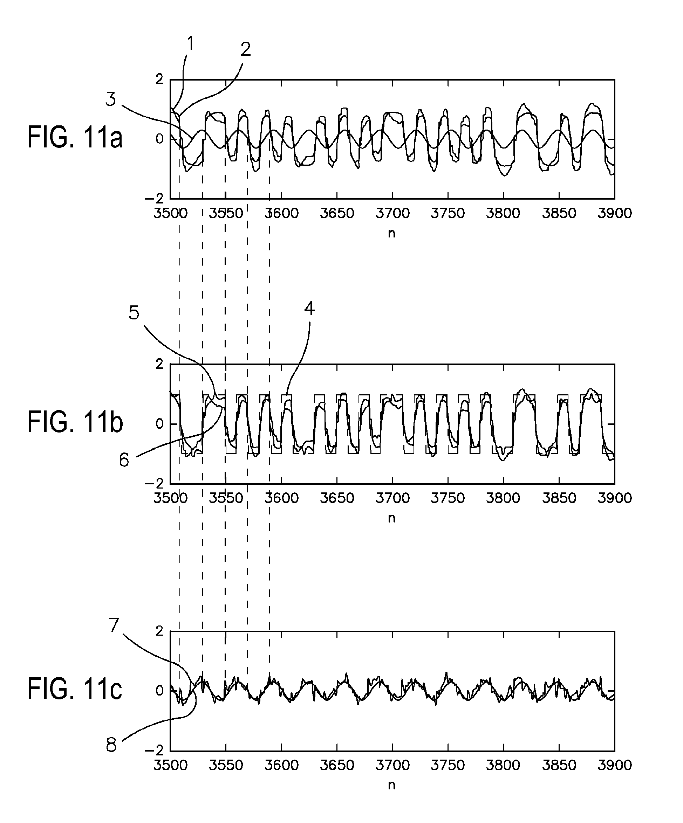

On se réfère à présent aux courbes des figures 11 a à 11 c qui illustrent l'allure des différents signaux mis en oeuvre au sein du moyen de détermination MDET.

Sur la figure 11a, la courbe référencée 1 représente le signal composite SCP. Les courbes référencées 2 et 3 correspondent respectivement au premier et au deuxième signal BL1 et BL2 d'une première et d'une deuxième balise, selon l'exemple décrit ci-avant. En d'autres termes, le signal composite (courbe 1) est la somme des signaux BL1 et BL2 (courbes 2 et 3) ainsi que d'un signal de bruit non représenté à des fins de simplification.

Sur la figure 11b, la courbe référencée 4 correspond aux informations binaires contenues dans le premier signal BL1, autrement dit le signal $\overline{BL1}$.

La courbe référencée 5 correspond au premier signal filtré par le filtre à réponse impulsionnelle finie, BL1F, dont la forme se rapproche de celle du signal BL1 de la courbe 1, figure 11a.

La courbe 6 est le signal composite SCP déjà représenté sur la figure 11 a.

Enfin, sur la figure 11c, la courbe référencée 7 correspond au signal représentatif du deuxième signal $\overline{BL2}$. On note que chaque transition du premier signal BL1 génère un pic perturbateur sur le signal représentatif du deuxième signal $\overline{BL2}$, comme nous le montre les lignes de correspondance en pointillé.

La courbe référencée 8 correspond au signal BL2 idéal, compris dans le signal composite SCP.

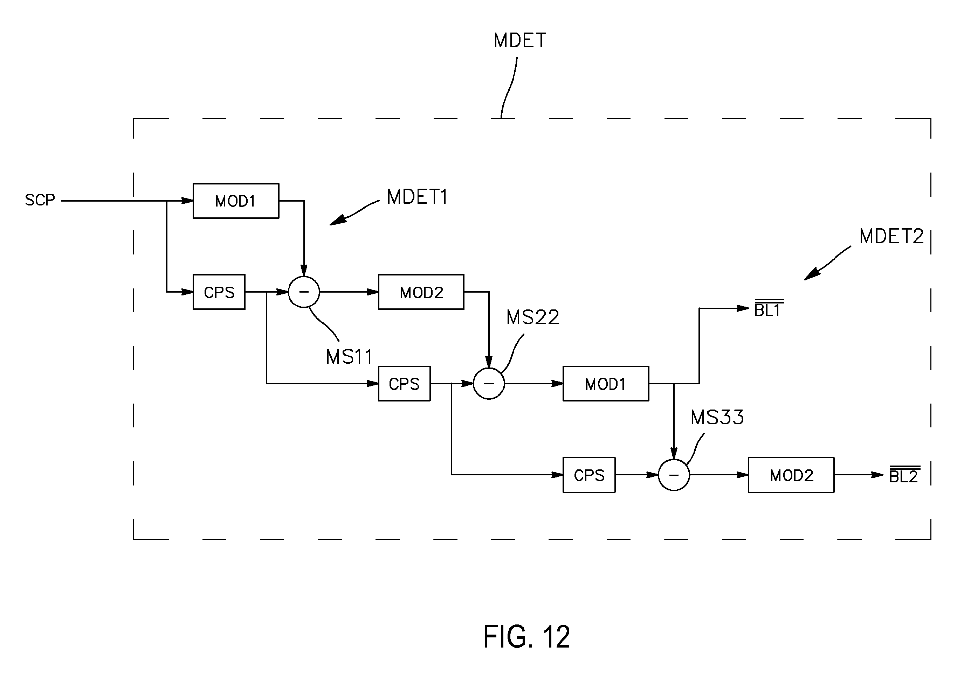

On se réfère à présent à la figure 12 qui illustre un système de traitement incorporant plusieurs dispositifs de traitement tels que décrits ci-avant. Dans cet exemple, le système SYS comprend deux moyens référencés MDET1 et MDET2 montés en cascade, de manière à procéder au traitement du signal composite de manière itérative. On améliore ainsi la précision du signal de synchronisation au niveau bit, ainsi que de la porteuse démodulée.

Parallèlement à chaque module MOD1 et MOD2 est couplé un module CPS de compensation du retard de traitement. Ainsi le premier module MOD1 génère un premier signal filtré. Ce dernier est soustrait au signal composite retardé par l'intermédiaire d'un moyen de soustraction MS11.

Le signal résultant de cette soustraction est un signal représentatif du deuxième signal provenant de la deuxième balise. Il est traité par un deuxième module MOD2, puis le signal issu de ce traitement est soustrait à l'aide d'un moyen de soustraction MS22 au signal composite, une nouvelle fois retardé. De même que précédemment, on retraite le signal résultant à l'aide d'un premier module MOD1. On récupère alors le signal reconstruit $\overline{BL1}$.

Celui-ci est soustrait via un moyen de soustraction MS33 au signal composite une nouvelle fois retardé. Le signal résultant est traité par un autre deuxième module MOD2.

On récupère alors le signal $\overline{BL2}$. Bien entendu, il est possible de cascader plus ou moins de premiers et de deuxièmes modules, selon le degré de précision que l'on souhaite obtenir.

**Revendications**

1. Procédé de traitement d'un premier et d'un deuxième signal numérique binaire à partir d'un signal composite incident comprenant les premier et deuxième signaux numériques superposés en temps et en fréquence, **caractérisé par le fait qu'**il comprend une démodulation des premier et deuxième signaux superposés, comportant pour chaque bit du signal composite incident :

   - une étape de détermination (2) de descripteurs du premier et du deuxième signal et des signaux de synchronisation au niveau bit du premier et du deuxième signal,
   - une construction (3) de quatre signaux composites intermédiaires, chacun correspondant à une combinaison possible des bits du premier et du deuxième signal selon leur valeur de bit, ladite construction des quatre signaux composites intermédiaires étant faite à l'aide des descripteurs et desdits signaux de synchronisation au niveau bit
   - quatre soustractions (4), respectivement chacun des quatre signaux composites intermédiaires du signal composite incident,
   - une estimation (5) du maximum de vraisemblance de chaque résultat des soustractions, et

- une délivrance (6) des bits du premier et du deuxième signal dont les valeurs correspondent à celles de la combinaison ayant le maximum de vraisemblance le plus élevé.

**2.** Procédé selon la revendication précédente, dans lequel lesdits descripteurs correspondent à la porteuse du signal et/ou à l'horloge au niveau du bit et/ou à la période d'un bit et/ou l'amplitude du signal et/ou à l'instant de début et de fin du signal.

**3.** Procédé selon l'une des revendications 1 ou 2, dans lequel ladite étape de détermination des descripteurs comprend un traitement desdits premier et deuxième signaux superposés, le premier signal ayant une amplitude supérieure au deuxième signal, comportant :

- une démodulation grossière (10) puis une reconstruction (20) des données binaires du premier signal à partir du signal composite incident,
- un filtrage de type adaptatif (30) du premier signal reconstruit de façon à le conformer au premier signal compris au sein du signal composite incident,
- une soustraction (40) du premier signal filtré au signal composite incident de façon à obtenir un signal représentatif du deuxième signal, et
- une démodulation grossière (50) du deuxième signal à l'aide dudit signal représentatif du deuxième signal.

**4.** Procédé selon la revendication précédente, comprenant en outre un échantillonnage du signal composite incident, ladite démodulation des premier et deuxième signaux superposés étant appliquée à chaque échantillon du signal composite incident.

**5.** Procédé selon la revendication précédente, dans lequel le premier et le deuxième signal sont sans code d'erreur et non orthogonaux entre eux.

**6.** Procédé selon l'une des revendications 3 à 5, comprenant en outre une étape de traitement du signal représentatif du deuxième signal aux endroits correspondant aux transitions du premier signal.

**7.** Procédé selon l'une des revendications 3 à 6, dans lequel pour chaque échantillon, k coefficients mis en oeuvre pour le filtrage de type auto adaptatif du premier signal reconstruit, k étant un entier, sont mis à jour, à l'aide d'un signal de consigne fonction du $n-1-k^{ième}$ échantillon du premier signal reconstruit, n étant un entier représentatif de l'instant d'échantillonnage de l'échantillon considérée, du $n-1^{ième}$ échantillon du signal représentatif du deuxième signal, et du coefficient de même rang pour l'échantillon précédent.

**8.** Procédé selon l'une des revendications 3 à 7, dans lequel lesdits premier et deuxième signaux appartiennent au même domaine temporel et fréquentiel.

**9.** Procédé selon l'une des revendications 3 à 8, dans lequel ledit traitement des premier et deuxième signaux superposés est réitérée au moins deux fois.

**10.** Procédé selon l'une des revendications précédentes, dans lequel l'étape d'estimation comprend une détection d'une durée au cours de laquelle les résultats des soustractions sont stables, et une délivrance d'un indicateur signalant si cette durée est supérieure ou non à un seuil donné, et dans lequel :

- si la valeur de ladite durée est supérieure à un seuil donné, l'estimation du maximum de vraisemblance de chaque résultat des soustractions est effectuée en fonction d'un signal d'horloge associé au signal devançant l'autre signal parmi le premier et le deuxième signal, ou
- si la valeur de ladite durée est inférieure au seuil donné, l'estimation du maximum de vraisemblance de chaque résultat des soustractions est effectuée en fonction des signaux d'horloge associés au premier et au deuxième signal.

**11.** Procédé selon la revendication précédente, dans lequel lorsque ladite durée est inférieure au seuil donné, on détecte en outre les doubles erreurs survenant sur les bits du premier et du deuxième signal à délivrer.

**12.** Système (SYS) de traitement d'un premier et d'un deuxième signal numérique binaire apte à recevoir un signal composite incident (SCP) comprenant les premier et deuxième signaux numériques superposés en temps et en fréquence (BL1, BL2), **caractérisé par le fait qu'**il comprend un dispositif de démodulation (DIS) des premier et deuxième signaux numériques superposés, comportant :

- un moyen de construction (MCONS) apte à construire quatre signaux composites intermédiaires (SCI1, SCI2, SCI3, SCI4), chacun correspondant à une combinaison possible du premier et du deuxième signal selon leur valeur de bit,
- un moyen de détermination (MDET) apte à déterminer des descripteurs du premier et du deuxième signal et des signaux de synchronisation au niveau bit du premier et du deuxième signal, lesdits descripteurs étant délivrés au moyen de construction de façon qu'il soit apte à construire lesdits signaux intermédiaire à l'aide des descripteurs et desdits signaux de synchronisation au niveau bit,
- quatre moyens de soustraction (MS1, MS2, MS3, MS3), chacun étant apte à soustraire l'un des quatre signaux composites intermédiaires du signal composite incident,
- un moyen d'estimation (MEST) apte à estimer le maximum de vraisemblance de chaque résultat des soustractions, et apte à délivrer en sortie les bits du premier et du deuxième signal dont les valeurs correspondent à celles de la combinaison ayant le maximum de vraisemblance le plus élevé.

13. Système selon la revendication précédente, dans lequel lesdits descripteurs correspondent à la porteuse du signal (Prt1, Prt2) et/ou à l'horloge au niveau du bit (Hv1, Hv2) et/ou à la période d'un bit et/ou l'amplitude du signal et/ou à l'instant de début et de fin du signal.

14. Système selon la revendication précédente, dans lequel ledit moyen de détermination comprend une entrée apte à recevoir le signal composite et incorpore des moyens de traitement du premier et du deuxième signal à partir dudit signal composite incident, le premier signal ayant une amplitude supérieure à celle du deuxième signal, le moyen de détermination comprenant :

- un premier moyen de démodulation (DTC1) apte à démoduler grossièrement le premier signal à partir du signal composite,
- un moyen de reconstruction (RCN1) couplé en sortie du moyen de démodulation, apte à reconstruire les données binaires du premier signal à partir du premier signal démodulé,
- un moyen de filtrage (RIF) de type adaptatif apte à recevoir et à filtrer le premier signal reconstruit de façon à le conformer au premier signal compris au sein du signal composite incident,
- un moyen de soustraction (MS) apte à recevoir d'une part le signal composite incident, et d'autre part le premier signal filtré, de façon à soustraire le premier signal filtré au signal composite incident, et à délivrer un signal représentatif du deuxième signal,
- un deuxième moyen de démodulation (DTC2) apte à démoduler grossièrement le deuxième signal à partir du signal représentatif du deuxième signal.

15. Système selon la revendication précédente, dans lequel le moyen de détermination comprend en outre un moyen d'échantillonnage (ECH) couplé en amont du moyen de démodulation, apte à recevoir le signal composite en entrée, et à délivrer en sortie des échantillons du signal composite au moyen de démodulation .

16. Système selon l'une des revendications 14 à 15, dans lequel le moyen de détermination comprend en outre un moyen de traitement des transitions (TRT), apte à traiter ledit signal représentatif du deuxième signal aux endroits correspondant aux transitions du premier signal, le moyen de traitement des transitions étant couplé en sortie du moyen de démodulation.

17. Système selon l'une des revendications 14 à 16, dans lequel ledit moyen de filtrage (RIF) est un filtre à réponse finie comprenant :

- une première entrée apte à recevoir le premier signal reconstruit,
- une deuxième entrée dite de commande apte à recevoir un signal de consigne fonction du premier signal reconstruit, du signal représentatif du deuxième signal et d'un coefficient de convergence, et
- une sortie apte à délivrer le premier signal filtré.

18. Système selon la revendication précédente, dans lequel le moyen de soustraction et le moyen de filtrage sont couplés de façon à former un filtre auto adaptatif (FIL).

19. Système selon l'une des revendications 14 à 18, comprenant au moins deux moyens de détermination (MDET1, MDET2), montés en cascade.

**20.** Système selon l'une des revendications 12 à 20, dans lequel le moyen d'estimation comprend un moyen de détection (MDTC) apte à détecter une durée au cours de laquelle les résultats des soustractions sont stables, et apte à délivrer un indicateur signalant si cette durée est supérieure ou non à un seuil donné, et dans lequel :

- si la valeur de ladite durée est supérieure à un seuil donné, le moyen d'estimation est apte à estimer le maximum de vraisemblance de chaque résultat des soustractions en fonction d'un signal d'horloge associé au signal devançant l'autre signal parmi le premier et le deuxième signal, ou
- si la valeur de ladite durée est inférieure au seuil donné, le moyen d'estimation est apte à estimer le maximum de vraisemblance de chaque résultat des soustractions en fonction des signaux d'horloge associés au premier et au deuxième signal.

**21.** Système selon la revendication précédente, dans lequel le moyen d'estimation est apte en outre, à détecter les doubles erreurs survenant sur les bits du premier et du deuxième signal à délivrer, lorsque ladite durée est inférieure au seuil donné.

**22.** Utilisation du système selon l'une des revendications 14 à 21, au sein d'un satellite apte à recevoir des signaux émis par des balises de type ARGOS.

FIG. 1

1

Réception du message composite

2

Démodulation grossière des signaux
BL1 et BL2

3

Construction de 4 signaux composites
intermédiaires

4

Soustraction de chaque signal composite
intermédiaire du signal composite incident

5

Estimation du maximum de vraisemblance et
sélection du signal composite intermédiaire adéquat

Délivrance des signaux 1 et 2 démodulés

6

FIG. 2

FIG. 3

EP 2 120 356 A1

Cas1

| VOIES | | |
|---|---|---|
| | voie1 | voie2 |
| SC1 | 0 | 0 |
| SC2 | 0 | 1 |
| SC3 | 1 | 0 |
| SC4 | 1 | 1 |

Treillis de l'état des voies

TR

TR2   TR1

FIG. 4

FIG. 5

<u>Résultats</u>

1<sup>er</sup> coup:

| | |
|---|---|
| SC1: 00 | A |
| SC2: 01 | B |
| SC3: 10 | C → X |
| SC4: 11 | D |

2<sup>eme</sup> coup:

| | |
|---|---|
| SC1: 00 | A |
| SC2: 01 | B |
| SC3: 10 | C |
| SC4: 11 | D → X |

FIG. 6

Résultats

1er coup:

SC1: 00 | A
SC2: 01 | B
SC3: 10 | C ——► X
SC4: 11 | D

(TR2)

2eme coup:

SC1: 00 | A
SC2: 01 | B
SC3: 10 | C
SC4: 11 | D ——► X

(TR1)

3eme coup:

SC1: 00 | A ——► X
SC2: 01 | B
SC3: 10 | C
SC4: 11 | D

(TR2)

4eme coup:

SC1: 00 | A
SC2: 01 | B
SC3: 10 | C ——► X
SC4: 11 | D

(TR1)

5eme coup:

SC1: 00 | A ——► X
SC2: 01 | B
SC3: 10 | C
SC4: 11 | D

cohérent

incohérent

incohérent

cohérent

FIG. 7

2

```
        ┌─────────────────────────────┐
        │   démodulation grossière     │────── 10
        │      du premier signal       │
        └─────────────────────────────┘
                      │
                      ▼
        ┌─────────────────────────────┐
        │     reconstruction du        │────── 20
        │       premier signal         │
        └─────────────────────────────┘
                      │
                      ▼
        ┌─────────────────────────────┐
        │     filtrage du premier      │────── 30
        │          signal              │
        └─────────────────────────────┘
                      │
                      ▼
        ┌─────────────────────────────┐
        │ soustraction du premier signal│───── 40
        │     au signal composite      │
        └─────────────────────────────┘
                      │
                      ▼
        ┌─────────────────────────────┐
        │   démodulation grossière     │
        │     du deuxième signal       │────── 50
        └─────────────────────────────┘
```

FIG. 8

FIG. 9

FIG. 10

EP 2 120 356 A1

FIG. 11a

FIG. 11b

FIG. 11c

FIG. 12

EP 2 120 356 A1

**EP 2 120 356 A1**

Europäisches Patentamt
European Patent Office
Office européen des brevets

# RAPPORT DE RECHERCHE EUROPEENNE

Numéro de la demande

EP 09 15 7391

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/115459 A (ERICSSON TELEFON AB L M [SE]) 2 novembre 2006 (2006-11-02) | 1-3, 11-15,22 | INV. H04B1/707 H04L25/03 |
| Y | * page 4, ligne 26 - page 5, ligne 7 * * page 10, ligne 11 - page 12, ligne 25 * * revendications 1,19; figures 4,5 * ----- | 4-10, 16-21 | |
| Y | US 2003/206577 A1 (LIBERTI JOSEPH CHARLES [US] ET AL) 6 novembre 2003 (2003-11-06) * abrégé * * alinéas [0006], [0043], [0044], [0059], [0077] * * figures 1,2,6-15 * ----- | 4-10, 16-21 | |

| DOMAINES TECHNIQUES RECHERCHES (IPC) |
|---|
| H04B H04L |

Le présent rapport a été établi pour toutes les revendications

| Lieu de la recherche | Date d'achèvement de la recherche | Examinateur |
|---|---|---|
| Munich | 8 octobre 2009 | Schiffer, Andrea |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 7391

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-10-2009

| Document brevet cité au rapport de recherche | Date de publication | Membre(s) de la famille de brevet(s) | Date de publication |
|---|---|---|---|
| WO 2006115459 A | 02-11-2006 | CN 101185249 A<br>EP 1875623 A2<br>US 2006245476 A1 | 21-05-2008<br>09-01-2008<br>02-11-2006 |
| US 2003206577 A1 | 06-11-2003 | US 2005128985 A1<br>US 2005111414 A1 | 16-06-2005<br>26-05-2005 |

EPO FORM P0460

Pour tout renseignement concernant cette annexe : voir Journal Officiel de l'Office européen des brevets, No.12/82